# EUROPÄISCHE PATENTANMELDUNG

(11) **EP 1 346 878 A2**
(43) Veröffentlichungstag der Anmeldung: **24.09.2003**
(21) Anmeldenummer: 03006074.3
(22) Anmeldetag: 19.03.2003
(51) Int. Cl.: B60R 11/02

(54) **Telemetrie-Einheit**

(30) Priorität: 21.03.2002 DE 10212434
(71) Anmelder: AM3 AutoMotive MultiMedia AG, 90762 Fürth (DE)
(72) Erfinder: Brandt-Anheuser, Klaus, 90762 Fürth (DE)
(74) Vertreter: Pröll, Jürgen, Dipl.-Ing.

(57) **Zusammenfassung**

Die Erfindung betrifft eine Telemetrie-Einheit für ein Fahrzeug, bestehend aus einer Kontroll-Einheit, mindestens einer Sende-Emfangs-Einheit, mindestens einer Antennen-Einheit, einer GPS-Einheit mit zugehöriger GPS-Antenne, einer Meßdaten-Erfassungs-Einheit zur Bereitstellung und Ermittlung von Telemetrie-Meßdaten. Die Telemetrie-Einheit weist ausserdem eine Versorgungs-Einheit und eine Magnethalterung mit einer elektrischen Kupplung und einer mechanischen Entriegelung auf, wobei über die Magnethalterung die Telemetrie-Einheit an einem Fahrzeug angebracht und gehalten wird.

## Beschreibung

Die Erfindung betrifft eine Telemetrie-Einheit in Form eines unabhängigen Moduls, welches über eine Magnethalterung an einem Fahrzeug anbringbar und fixierbar ist, mit den Merkmalen des Anspruches 1.

Derzeitig werden immer mehr Fahrzeuge wie Kraftfahrzeuge, Motorräder, Schienenfahrzeuge und auch Container mit Telemetrie-Einheiten ausgerüstet, die es erlauben, diverse Messwerte, wie aktueller Standort, aktuelle Geschwindigkeit, Temperatur, Luftfeuchte usw. an eine zentrale Stelle zur Verwaltung zu übertragen, um dort zu Service- und/oder sonstigen Zwecken be- und weiterverarbeitet werden zu können.

Die derzeitigen bekannten Telemetrie-Einheiten sind allesamt direkt im Fahrzeug verbaut, damit diese relativ teueren Einheiten nicht unbefugt entfernt werden können. Diese Telemetrie-Einheiten werden vom Bordstromnetz versorgt und sind allesamt somit vom Bordnetz des Kraftfahrzeuges bzw. Fahrzeuges abhängig.

Aus DE-A1-199 33 067 ist eine Fahrzeugkommunikationsanlage mit einer Vielzahl von Komponenten bekannt, welche an unterschiedlichen Stellen im Fahrzeug angeordnet sind. Die einzelnen Komponenten der Fahrzeugkommunikationsanlage sind über einen Bus miteinander verbunden. Zur Verwaltung des Busses ist eine Mikrocomputereinheit vorgesehen, welche in einem Bedienteil integriert ist. Dieses Bedienteil weist elektrische und mechanische Trennstellen auf und ist im Armaturenbrett des Fahrzeuges angeordnet und über eine Verriegelung/Entriegelung abnehmbar.

Aus DE-A1-197 37 332 ist ein Autoradio bekannt, welches auf seiner Frontseite ein abnehmbares Bedienteil aufweist. Das abnehmbares Bedienteil ist mit dem Autoradiogehäuse über mindestens eine Kontaktleiste verbunden.

Aus DE-A1-196 40 735 ist ein Telematikgerät für ein Kraftfahrzeug offenbart. In das Telematikgerät ist ein Autoradio mit einem RDS-Modul, einem Funktelefon, einem Ortungs- und Navigationssystem integriert und in einem Gehäuse angeordnet.

Aufgabe der Erfindung ist es, eine bordnetzunabhängige Telemetrie-Einheit aufzuzeigen, welche an nahezu jedem beliebigen Kraftfahrzeug anbringbar ist und zugleich einen Diebstahlschutz gewährleistet.

Diese Aufgabe wird anhand der Merkmale des Anspruches 1 gelöst. Vorteilhafte Ausgestaltungen der Erfindung ergeben sich anhand der abhängigen Ansprüche.

Die Telemetrie-Daten werden über eine Funkstrecke, insbesondere über GSM, UMTS, Bündel- oder Betriebsfunk usw. an eine zentrale Datenverarbeitungseinheit übertragen. Die Telemetrie-Einheit ist als eigenständiges Modul ausgestaltet und mit einer eigenen Energieversorgung versehen. Diese Energieversorgung besteht beispielsweise aus einer Batterieeinheit bzw. einer Akku-Einheit. Es ist aber auch vorgesehen, eine Solarzelleneinheit anzubringen, durch welche die Akku-Einheit bei Einfall von Licht aufladbar ist.

Im Weiteren ist die Telemetrie-Einheit mit einer Magneteinheit ausgestattet, welche die Telemetrie-Einheit an jeder metallischen Fläche fixierbar und arretierbar macht.

Somit besteht die Möglichkeit, die Telemetrie-Einheit an jedes magnetische Objekt an den jeweilig funktechnisch geeigneten Stellen anzubringen, ohne daß die Telemetrie-Einheit selbst über eine Stromversorgungsverbindung zum Bordnetz des Fahrzeuges verfügen muß. Auf diese Weise wird die Problematik der Verkabelung umgangen.

Die Magnethalterung muß so stark ausgeprägt sein, daß sie auch bei starken Querbeschleunigungen, wie Rütteln oder Schlaglöchern sich nicht löst. Außerdem ist sie derart ausgestaltet, daß sie nicht durch Unbefugte lösbar ist. Die Magneteinheit wird durch eine geeignete mechanische
Entriegelungseinheit, beispielsweise der Erweiterung des Luftspaltes durch einen mechanischen Excenter, erweitert. Damit kann über eine Bedieneinheit an der Außenseite der Telemetrie-Einheit die magnetische Kraft soweit geschwächt werden, daß die Telemetrie-Einheit leicht vom Fahrzeug gelöst werden kann. Um die Entriegelungseinheit für Dritte weitgehend zu schützen, verfügt diese über eine elektrische Kupplung, welche von außen unzugänglich ist. Die elektrische Kupplung wird mittels Funkstrecke und einem entsprechenden Datenprotokoll von der zentralen Datenverwaltungseinheit oder von einem geeigneten mobilen Funkgerät durch Anwahl der Telemetrie-Einheit und Eingabe eines geschützten Freigabecodes ver- bzw. entriegelt. Nur wenn der Entriegelungsvorgang vor Entnahme durchgeführt ist, kann die Magnetbefestigung über die mechanische Entriegelung gelöst werden.

Im Weiteren wird die Telemetrie-Einheit anhand eines Ausführungsbeispieles anhand einer Figur näher erläutert.

Die Telemetrie-Einheit 1 weist mindestens folgende Bestandteile auf: eine Kontroll-Einheit 2, mindestens eine Sende-Empfangs-Einheit 3, 4, eine GPS-Einheit 5, mindestens eine Antennen-Einheit 6, 7, eine GPS-Antennen-Einheit 7a, mindestens eine Meßdaten-Erfassungs-Einheit 8, mindestens eine Versorgungs-Einheit 9, mindestens eine Magnethalterung 10, wobei in der Magnethalterung 10 eine elektrische Kupplung 11 und eine mechanische Entriegelung 12 angeordnet ist.

Die Telemetrie-Einheit 1 ist mit der Versorgungs-Einheit 9 ausgestattet, welche die Energieversorgung der Telemetrie-Einheit 1 bereitstellt. Die Versorgungs-Einheit 9 ist als Batterie- oder Akku-Einheit ausgestaltet. Sie versorgt die gesamte Telemetrie-Einheit 1 mit der notwendigen Energie. Um den Energieverbrauch zu reduzieren, überwacht die Kontroll-Einheit 2 die Sende- und Empfangs-Einheit 3, 4 und die GPS-Einheit 5 in der Weise, daß diese nur in Betrieb sind, wenn sich zum einen die Position, welche über die GPS-Einheit 5 ermittelt wird, in einem von der Kontroll-Einheit 2 vorgegebenen Zeitraum, verändert, oder wenn Daten ausgesendet oder empfangen werden.

Im Weiteren ist die Sende-Empfangs-Einheit 3, 4 derart ausgestaltet, daß sie in einen Sleep-Modus wechselt und wenn keine externe Datenübertragung ansteht, und der Datenempfang oder die Datenversendung beendet ist. Die Sende-Empfangs-Einheit 3, 4 wechselt zu einstellbaren Zeitintervallen vom Sleep-Modus in einen Überwachungsmodus und scannt die zu überwachenden Empfangsfrequenzen, ob Daten zu empfangen sind. Um einen gesicherten Datenempfang zu gewährleisten werden die Daten von der Datenzentrale erst dann an die Sende-Empfangs-Einheit 3, 4 gesendet, wenn diese eine Quittung rücksendet, dass sie nunmehr im Überwachungsmodus oder im Vollbetrieb ist. Sollen Daten von der Telemetrie-Einheit 1 versendet werden, so sendet die Kontroll-Einheit 2 an die Sende-Empfangs-Einheit 3, 4 einen Befehl und diese aus einem möglicherweise bestehenden Sleep-Modus zu erwecken. Erst nach der Absendung diese Befehles werden die zu übertragenden Daten von der Kontroll-Einheit 2 an die Sende-Empfangs-Einheit 3, 4 übertragen. In einer weiteren vorteilhaften Ausgestaltung der Erfindung weist die Telemetrie-Einheit 1 eine Sende-Einheit 3 und eine separate Empfangs-Einheit 4 auf. Durch diese Ausgestaltung der Erfindung muss die Kontroll-Einheit 2 lediglich die Sende-Einheit 3 aus dem Sleep-Modus erwecken, wenn Daten zu senden sind. Nach des Versendung der Daten wird die Sende-Einheit 3 wieder in den Sleep-Modus verbracht. Die Empfangs-Einheit 4 wird von der Kontroll-Einheit 4 nicht überwacht bzgl. des Sleep-Modus, denn diese wird in vorherig beschriebener Weise von der Zentrale Z aus dem Sleep-Modus erweckt.

Im Weiteren steuert die Kontroll-Einheit 2 die Meßdaten-Erfassungs-Einheit 8 derart an, daß diese in einen sogenannten "Sleep-Modus" übergeht, wenn die eingehenden Daten, welche von der Meßdaten-Erfassungs-Einheit 8 ermittelt werden, sich über einen vorgegebenen Zeitraum nicht verändern. In diesem Fall geht die Kontroll-Einheit 2 davon aus, daß das Fahrzeug im Ruhezustand ist und eine Meßdatenüberwachung nicht notwendig ist. Im Weiteren ist die Meßdaten-Erfassungs-Einheit 8 mit einer kleinen Speichereinheit ausgestattet, in welcher Daten über einen definierten Zeitraum zwischengespeichert werden können. Dies ermöglicht es, die Daten in der Messdaten-Erfassungs-Einheit 8 zunächst zwischenzuspeichern und erst bei Abfrage auszusenden. Um weitere Energie zu sparen, da insbesondere Funkverbindungsaufbau energieverzehrend ist, weist die Kontroll-Einheit 2 einen Zwischenspeicher auf, in welchem die Daten der Meßdaten-Erfassung-Einheit 8 zwischengespeichert werden und diese dann turnusmäßig, beispielsweise jeweils alle zwei Stunden an eine Zentrale Z übertragen werden. Nach der Übertragung werden diese Daten gelöscht. Auf diese Weise ist es möglich, die Energieversorgungs-Einheit 9 zu entlasten und eine erhöhte Lebensdauer bereitzustellen.
In einer vorteilhaften Ausgestaltung der Erfindung ist vorgesehen, daß die Versorgungs-Einheit 9 mit einer Ladungspumpe und einer zugehörigen Energieerzeugungseinheit ausgestattet ist. Diese Energieerzeugungseinheit erzeugt Energie und leitet diese über die Ladungspumpe der Versorgungs-Einheit 9 zu. Die Energieerzeugungseinheit ist beispielsweise als Solarzelleneinheit ausgestaltet, welche bei Auftreffen von Licht Energie erzeugt, oder als Beschleunigungsdynamo, welcher Rüttel- und Stoßbewegungen des Fahrzeugs in Energie umsetzt.

Wie bereits beschrieben, werden von der Meßdaten-Erfassungs-Einheit 8 die gewünschten Meßdaten erfaßt, zwischengespeichert und/oder an die Kontroll-Einheit 2 übertragen. Die Kontroll-Einheit 2 sendet diese Daten über die Sende-Empfangs-Einheit 3, 4 an die Zentrale Z weiter. Die Zentrale Z steht mit der Kontroll-Einheit 2 über die Sende-Empfangs-Einheit 3, 4 und den zugehörigen Antennen 6, 7 in Verbindung und kann auf diese Weise steuernd auf die Telemetrie-Einheit 1 eingreifen oder aber die Daten abfragen und empfangen. Die Zentrale Z kann im Fahrzeug selbst, oder an einem durchaus vom Fahrzeug weit entfernten Standort, wie beispielsweise der Firmen-Zentrale, bei welcher das Fahrzeug betrieben wird, angeordnet sein. Um die Datenübertragung und die notwendige Energie für die Datenübertragung möglichst gering zu halten, ist in vorteilhafter Weise vorgesehen, daß, wenn die Zentrale Z sich nicht in unmittelbarer Nähe des Fahrzeuges befindet, eine Unterzentrale Z1 am Fahrzeug selbst vorgesehen ist, über welche die Datenverbindung zwischen der Telemetrie-Einheit 1 und der Datenaustausch zwischen der Telemetrie-Einheit 1 und der Unterzentrale Z1 erfolgt. Auf diese Weise ist ein geringerer Energiebedarf für den Aufbau der Funkstrecke notwendig. In einer besonders vorteilhaften Ausgestaltung der Erfindung ist vorgesehen, daß die Unterzentrale Z1 mit der Telemetrie-Einheit 1 eine Kabelverbindung eingeht und über diese Kabelverbindung auch die Energieversorgungs-Einheit 9 aufladbar ist. Diese Kabelverbindung ist jedoch lösbar. Es ist in vorteilhafter Weise an der Telemetrie-Einheit 1 ein Stecker S hierzu vorgesehen.

Die Telemetrie-Einheit 1 weist im Weiteren eine GPS-Einheit 5 auf, welche mit einer GPS-Antenne 7a ausgestattet ist. Über diese GPS-Einheit 5 wird der aktuelle Standort der Telemetrie-Einheit 1 ermittelt und erfasst. Ist das Fahrzeug mit einer Unterzentrale Z1 ausgestattet, welche ebenfalls eine GPS-Einheit aufweist, so kann von der Zentrale Z geprüft werden, ob die Telemetrie-Einheit 1 sich im Umkreis, d. h. am Fahrzeug befindet, oder ob sie unterwegs abgefallen oder gestohlen ist. Im Weiteren ist es möglich, über die Daten der GPS-Einheit 5 den Standort der Telemetrie-Einheit 1 zu ermitteln und, im Falle des Verlustes, die Telemetrie-Einheit 1 wieder aufzufinden.

Zur Fixierung und Anbringung der Telemetrie-Einheit 1 an ein Fahrzeug ist eine Magnethalterung 10 vorgesehen. Diese Magnethalterung 10 ist als Permanentmagnet ausgestaltet. Durch diese Magnethalterung 10 ist es möglich, die Telemetrie-Einheit 1 an nahezu jedem Ort am Fahrzeug, welcher ein metallisches Teil aufweist, anzubringen und zu fixieren. Es ist somit möglich, die Telemetrie-Einheit 1 an einer Stelle am Fahrzeug anzubringen, welche besonders funktechnisch günstig ist. Die Magnethalterung 10 ist aber derart dimensioniert (in ihrer magnetischen Kraftdimensionierung), dass sie auch bei starken Beschleunigungen, wie Rütteln oder Schlaglöchern sich nicht löst. Um die Telemetrie-Einheit 1, sobald die Magnethalterung 10 in Kontakt mit dem Fahrzeug getreten ist und die Telemetrie-Einheit 1 am Fahrzeug fixiert ist wieder zu lösen, ist eine elektrische Kupplung 11 vorhanden. Diese elektrische Kupplung 11 ermöglicht es die Telemetrie-Einheit 1 vom Fahrzeug wieder abzutrennen. Hierzu ist im Weiteren eine mechanische Entriegelung 12 angeordnet. Über die mechanische Entriegelung 12 wird beispielsweise, wenn sie in Form eines mechanischen Excenters ausgestaltet ist, der Luftspalt zwischen der Magnethalterung 10 und dem Fahrzeug erweitert, so daß die magnetische Kraft soweit geschwächt wird, daß durch Hinzufügung einer leichten Kraft die Telemetrie-Einheit 1 vom Fahrzeug wieder abnehmbar ist.

Um jedoch einem Dritten die Möglichkeit zu entziehen die Telemetrie-Einheit 1 abzunehmen, über die mechanische Entriegelung 12, ist selbige mit einer Sicherungsfunktion versehen. Diese Sicherungsfunktion wird über eine Sicherungsvorrichtung realisiert, in derart, dass die Sicherungsvorrichtung die mechanische Entriegelungsvorrichtung 12 erst dann freigibt, wenn vorher ein Freigabecode in die Telemetrie-Einheit 1 eingegeben ist. In einfachster Weise ist die mechanische Entriegelungsvorrichtung 12 hinter einer Klappe angeordnet, wobei die Klappe nur durch Eingabe eines Freigabecodes freigegeben wird. Der Freigabecode kann entweder über die Zentrale Z, über die Sende- und Empfangs-Einheit 3, 4, oder über die Kontroll-Einheit 2 eingegeben werden, wenn die Kontroll-Einheit 2 mit einer Tastatur oder mindestens mehreren Tasten, welche von außen zugänglich sind, verfügt. Empfängt die Kontroll-Einheit 2 den Freigabecode, so gibt sie die mechanische Entriegelungsvorrichtung 12 zur Benutzung frei. Dies ermöglicht es somit alleinig über die Zentrale Z, die Telemetrie-Einheit 1 vom Fahrzeug abnehmbar zu machen.

In einer weiteren vorteilhaften Ausgestaltung der Erfindung ist der Freigabecode aber auch über die Unterzentrale Z1 initiierbar. Dies ermöglicht es dann einem Fahrzeugführer die Telemetrie-Einheit 1 abzunehmen, in welchen Fällen auch immer. Im Weiteren ist einer vorteilhaften Ausgestaltung der Erfindung vorgesehen, daß eine externe Freigabe-Einheit Z3 vorgesehen ist. Diese externe Freigabe-Einheit Z3 ist im Prinzip eine funkgesteuerte Eingabe-Einheit, über welche der Freigabecode an die Kontroll-Einheit übermittelbar ist. Die Funktionsweise ist analog zum obigen Ausführungsbeispiel.

### Bezugszeichenliste

- 1: Telemetrie-Einheit
- 2: Kontroll-Einheit
- 3, 4: Sende-Empfangs-Einheit
- 5: GPS-Einheit
- 6, 7: Antennen-Einheit
- 8: Meßdaten-Erfassungs-Einheit
- 9: Versorgungs-Einheit
- 10: Magnethalterung
- 11: elektrische Kupplung
- 12: mechanische Entriegelung
- S: Stecker
- 7a: GPS-Antenne
- Z: Zentrale
- Z1: Unterzentrale
- Z2: Freigabe-Einheit

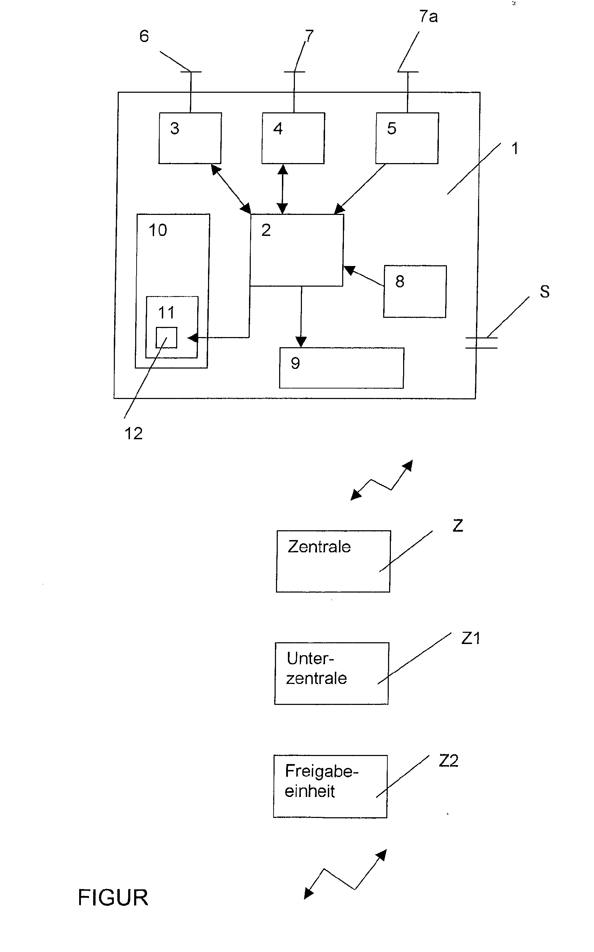

## Patentansprüche

1. Telemetrie-Einheit (1) für ein Fahrzeug, bestehend aus einer Kontroll-Einheit (2), mindestens einer Sende-Emfangs-Einheit (3, 4), mindestens einer Antennen-Einheit (6, 7), einer GPS-Einheit (5) mit zugehöriger GPS-Antenne (7a) und einer Meßdaten-Erfassungs-Einheit (8) zur Bereitstellung und Ermittlung von Telemetrie-Daten,
**dadurch gekennzeichnet, dass**
die Telemetrie-Einheit (1) eine Versorgungs-Einheit (9), eine Magnethalterung (10) mit einer elektrischen Kupplung (11) und einer mechanischen Entriegelung (12) aufweist, wobei über die Magnethalterung (10) die Telemetrie-Einheit (1) an einem Fahrzeug angebracht und fixiert wird.

2. Telemetrie-Einheit (1), nach Anspruch 1,
**dadurch gekennzeichnet, dass**
die Magnethalterung (10) mindestens einen Permantenmagneten aufweist.

3. Telemetrie-Einheit (1), nach Anspruch 1 oder 2,
**dadurch gekennzeichnet, dass**
in der Magnethalterung (10) eine elektrische Kupplung (11) und eine mechanische Entriegelung (12) angeordnet sind.

4. Telemetrie-Einheit (1), nach einem der Ansprüche 1 bis 3,
**dadurch gekennzeichnet, dass**
die Versorgungs-Einheit (9) eine Batterie- oder Akkumulatoren-Einheit ist.

5. Telemetrie-Einheit (1), nach Anspruch 4,
**dadurch gekennzeichnet, dass**
die Telemetrie-Einheit (1) eine Energieerzeugungs-Einheit aufweist, welche über eine Ladungspumpe Energie in die Akkumulatoren-Einheit einspeist,
wobei die Energieerzeugungs-Einheit eine Solarzellen-Einheit ist.

6. Telemetrie-Einheit (1), nach einem der Ansprüche 1 bis 5,
**dadurch gekennzeichnet, dass**
zur Reduzierung des Energieverbrauchs die Kontroll-Einheit (2) die Sende-Empfangs-Einheit (3, 4) und/oder die GPS-Einheit (5) von der Versorgungs-Einheit (9) trennt und in einen Sleep-Modus verbringt, wenn sich die aktuelle Position, welche über die GPS-Einheit (5) ermittelt wird, in einem von der Kontroll-Einheit (2) vorgegebenen Zeitraum nicht verändert, oder wenn kein Datenaustausch erfolgt.

7. Telemetrie-Einheit (1), nach Anspruch 3,
**dadurch gekennzeichnet, dass**
die elektrische Kupplung (11) die Entfernung der Telemetrie-Einheit (1) vom Fahrzeug ermöglicht, indem sie den Zugriff auf die mechanische Entriegelung (12) freigibt und die mechanische Entriegelung (12) den Luftspalt zwischen der Magnethalterung (10) und dem Fahrzeug vergrößert.

8. Telemetrie-Einheit (1), nach Anspruch 7,
**dadurch gekennzeichnet, dass**
die mechanische Entriegelung (12) ein Excenter ist.

9. Telemetrie-Einheit (1), nach Anspruch 7 oder 8,
**dadurch gekennzeichnet, dass**
die mechanische Entriegelung (12) mit einer Sicherungsvorrichtung versehen ist, wobei die Sicherungsvorrichtung die mechanische Entriegelung (12) nur freigibt, wenn ein Freigabecode in die Telemetrie-Einheit (1) eingegeben oder von der Sende-Empfangs-Einheit (3, 4) empfangen worden ist.

10. Telemetrie-Einheit (1) nach einem der Ansprüche 7 bis 9,
**dadurch gekennzeichnet, dass**
die Sicherungsvorrichtung der mechanischen Entriegelung (12) eine Klappe ist, hinter welcher die mechanische Entriegelung (12) angeordnet ist und/oder der Freigabecode für die Sicherungsvorrichtung über die Zentrale (Z) über eine Unterzentrale (Z1) oder eine externe Freigabe-Einheit (Z3) eingebbar ist und/oderdie Unterzentrale (Z1) am und/oder im Fahrzeug angeordnet ist.
